# FASCICULE DE BREVET EUROPEEN

(11) **EP 2 419 328 B1**
(45) Date de publication et mention de la délivrance du brevet: **23.10.2013**
(21) Numéro de dépôt: 10713676.4
(22) Date de dépôt: 15.04.2010
(51) Int. Cl.: B64C 25/36, G01K 11/16

(54) **DISPOSITIF DE REDUCTION DU BRUIT AERODYNAMIQUE D'UN ATTERRISSEUR D'AERONEF**
VORRICHTUNG ZUR REDUZIERUNG DER STRÖMUNGSGERÄUSCHE EINES FLUGZEUGFAHRWERKS
DEVICE FOR REDUCING THE AERODYNAMIC NOISE OF AN AIRCRAFT LANDING GEAR

(30) Priorité: 16.04.2009 FR 0901845
(43) Date de publication de la demande: 22.02.2012
(73) Titulaire: Messier-Bugatti-Dowty, 78140 Vélizy Villacoublay (FR)
(72) Inventeur: MASSON, Richard, 78350 Les Loges en Josas (FR); ROUGIER, Thierry, 92410 Ville D'avray (FR)
(74) Mandataire: Beaudouin-Lafon, Emmanuel
(86) Numéro de dépôt international: PCT/EP2010/054988
(87) Numéro de publication internationale: WO 2010/119109

(56) Documents cités:
- EP-A1- 1 067 045
- EP-A1- 1 900 545
- EP-A1- 1 977 969
- DE-A1- 3 207 665

## Description

L'invention concerne la réduction du bruit aérodynamique généré par un atterrisseur escamotable d'aéronef lorsqu'il est déployé en phase de décollage et/ou d'atterrissage.

### ARRIERE PLAN DE L'INVENTION

DE 32 07 665 A1 montre un dispositif comportant deux flasques reliés par un lien. Il est connu du EP 1 067 045 A1 de prévoir un atterrisseur avec des éléments de carénage pour réduire le bruit.

Il s'avère qu'une source importante du bruit généré lors de l'atterrissage et du décollage d'un aéronef est constituée par ses atterrisseurs escamotables. Concrètement, un atterrisseur escamotable comprend un ensemble de roues portées par une structure qui est prévue mobile pour pouvoir rétracter le tout lorsque l'aéronef est en vol.

Compte tenu des différents impératifs auxquels doit répondre un tel atterrisseur, comme la tenue aux efforts en phase d'atterrissage et de roulage, ou la nécessité d'assurer le déploiement de l'atterrisseur en toute circonstance, la structure portant les roues est relativement complexe.

Une telle structure comporte une jambe centrale montée pivotante autour d'un axe transversal supérieur, et portant l'ensemble de roues à son extrémité inférieure. Cette structure comporte encore plusieurs barres ou bielles articulées sur la jambe, sur la structure de l'aéronef, et les unes par rapport aux autres, par autant d'articulations incluant un axe autour duquel pivotent les éléments articulés. Afin de réduire la masse, ces axes sont généralement creux.

L'atterrisseur comporte ainsi deux bielles formant une contrefiche pour bloquer la jambe en position déployée, deux autres bielles constituant un compas capable de transmettre un mouvement de pivotement autour d'un axe vertical, depuis une partie supérieure, vers l'ensemble de roues pour diriger l'aéronef lorsqu'il s'agit de l'atterrisseur avant.

Complémentairement, l'atterrisseur comporte encore une série de conduites souples hydrauliques et autres, redondantes, allant d'une partie supérieure de l'atterrisseur, jusqu'aux freins équipant l'ensemble de roues afin d'apporter la puissance hydraulique nécessaire au freinage.

Ces conduites souples sont solidarisées aux composants de la structure ponctuellement, par exemple au moyen de colliers, de telle manière qu'elles conservent une souplesse suffisante pour permettre le déploiement et la rétractation de l'atterrisseur sans dégrader ces conduites.

Concrètement, une telle structure escamotable avec ses équipements a une forme géométrique complexe constituant une multitude d'ouvertures, de chicanes, et de passages qui génèrent un bruit aérodynamique très important lorsque l'ensemble est traversé par un flux d'air évoluant à grande vitesse.

Par ailleurs, la réduction du bruit généré par un aéronef en phase d'atterrissage et de décollage constitue maintenant une préoccupation importante.

### OBJET DE L'INVENTION

Le but de l'invention est de proposer une solution pour remédier à cet inconvénient.

### RESUME DE L'INVENTION

A cet effet, l'invention a pour objet un dispositif de limitation du bruit aérodynamique d'un atterrisseur d'aéronef déployé en phase d'atterrissage et/ou de décollage, comportant deux flasques destinés à boucher respectivement chaque extrémité d'un axe creux de l'atterrisseur, tel qu'un axe d'articulation de deux bielles de cet atterrisseur, ainsi qu'au moins un lien destiné à être engagé dans l'axe creux pour relier les deux flasques l'un à l'autre afin de les maintenir plaqués aux extrémités de cet axe.

Avec cette solution, le bruit aérodynamique de tout atterrisseur peut être réduit sans devoir modifier l'atterrisseur en question, au moyen d'une opération consistant simplement à fixer deux flasques d'extrémité à chaque axe creux d'articulation en les reliant par un lien central qui assure leur maintien en position.

Selon l'invention, les flasques et/ou le lien sont fabriqués à partir de fibres naturelles telles que des fibres de chanvre ou de lin agglomérées dans une résine de type réutilisable.

Les flasques ainsi que le lien étant en matériau relativement peu résistant, ils ne risquent pas de détériorer l'aubage d'un réacteur de l'aéronef ou d'un prochain aéronef dans le cas où ils se détacheraient et tomberaient sur la piste. Dans ce cas, ces flasques ne risquent pas non plus de détériorer les pneumatiques, ni de coincer l'atterrisseur lors d'un relevage ou de son déploiement de l'aéronef ou d'un prochain aéronef.

Le dispositif peut ainsi se présenter sous forme d'un consommable fabriqué en matériau composite dégradable et/ou réutilisable, le dispositif devenant alors un "éco-produit". Par ailleurs, la souplesse des matériaux utilisés permet au dispositif de s'adapter aux déformations mécaniques de l'axe.

L'invention concerne également un dispositif tel que défini ci-dessus, dans lequel au moins un flasque comporte un orifice central destiné à être traversé par le lien, pour solidariser ce lien au flasque au moyen de l'extrémité de lien traversant le flasque.

Un lien central unique peut ainsi être utilisé pour maintenir les deux flasques plaqués contre les extrémités de l'axe creux. Chaque extrémité de lien dépassant d'un flasque peut alors être liée au flasque part tout moyen, c'est-à-dire par exemple par collage de cette extrémité à l'orifice central ou à la face externe du flasque, au moyen d'un noeud, d'un sertissage ou autre.

L'invention concerne également un dispositif tel que défini ci-dessus, comportant en outre au moins un moyen de blocage, tel qu'une agrafe, destiné à être rigidement solidarisé à une extrémité de lien traversant un flasque par son orifice, ce moyen de blocage présentant une section supérieure à celle de l'orifice pour être en appui sur une face externe de ce flasque.

Avec cette solution, la solidarisation du lien aux flasques consiste simplement à sertir une agrafe additionnelle à chaque extrémité de lien traversant un flasque lorsque l'ensemble est en place.

L'invention concerne également un dispositif tel que défini ci-dessus, dans lequel le flasque est pourvu de moyens de blocage d'une extrémité de lien traversant son orifice central.

L'orifice central peut par exemple être lui-même conçu pour constituer un organe de blocage, par exemple en présentant une découpe en étoile dont les sommets internes constituent alors des dents de blocage du lien.

L'invention concerne également un dispositif tel que défini ci-dessus, dans lequel le matériau du lien est thermoplastique pour lier ce lien à un flasque en matant la terminaison de l'extrémité de lien traversant l'orifice central de ce flasque au moyen d'une source de chaleur.

L'invention concerne également un dispositif tel que défini ci-dessus, dans lequel l'un des flasques comporte à l'une de ses faces des moyens de centrage grâce auxquels il s'emboîte dans l'extrémité d'axe qu'il est destiné à boucher.

L'invention concerne également un dispositif tel que défini ci-dessus, dans lequel les moyens de centrage sont formés par une réduction de diamètre du bord externe du flasque.

L'invention concerne également un dispositif tel que défini ci-dessus, dans lequel au moins un flasque comporte une ou plusieurs ouvertures destinée à éviter une accumulation d'air humide à l'intérieur de l'axe.

### BREVE DESCRIPTION DE LA FIGURE UNIQUE

La figure unique est une vue en coupe longitudinale montrant un axe creux d'une articulation de deux éléments d'atterrisseur équipé du dispositif selon l'invention.

### DESCRIPTION DETAILLEE DE L'INVENTION

L'idée à la base de l'invention réside dans le constat selon lequel dans un atterrisseur escamotable, les axes creux par lesquels les différents éléments mobiles sont articulés les uns par rapport aux autres constituent une source de bruit aérodynamique significative.

Selon l'invention, les extrémités d'un axe creux sont bouchées avec une paire de flasques reliés l'un à l'autre par un lien interne qui les plaque ou les bloque chacun dans l'extrémité qu'il bouche. Les flasques et le lien sont fabriqués dans un matériau relativement peu résistant, de sorte que dans le cas où ils se décrocheraient et tomberaient sur une piste de décollage ou d'atterrissage, ils ne peuvent pas détériorer l'aéronef ou un aéronef suivant.

L'ensemble constitué par les flasque et le lien peut alors être fabriqué en matériau à faible coût, préférentiellement recyclable, pour que le dispositif constitue un consommable à usage unique. A titre d'exemple, lors qu'une inspection de l'axe creux est nécessaire, les flasques et le lien existants sont détruits en étant retirés, et de nouveaux flasques avec un nouveau lien sont remis en place après l'inspection.

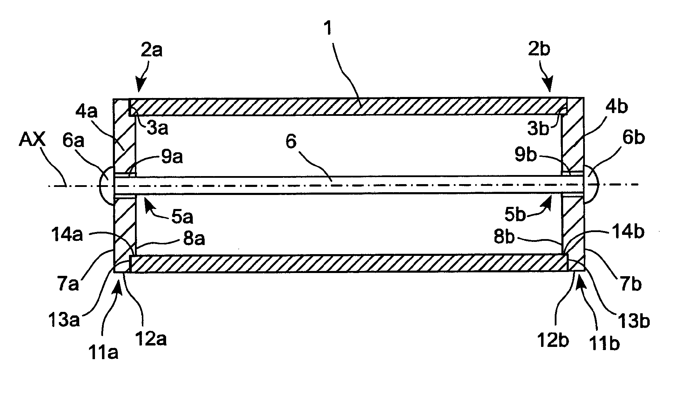

Comme visible dans la figure 1, un axe creux 1 d'une articulation d'atterrisseur non représentée a une forme cylindrique s'étendant autour et le long d'un axe AX de l'articulation. Il comporte une première et une seconde extrémité 2a et 2b formées par deux sections droites qui délimitent chacune une face d'extrémité, ces faces d'extrémités étant repérées respectivement par 3a et 3b. Chaque face d'extrémité a un forme de couronne circulaire plane orientée selon un plan normal à l'axe AX.

La première extrémité 2a et la seconde extrémités 2b sont fermées respectivement par un premier et un second flasque 4a et 4b qui sont reliés l'un à l'autre par un lien 6 engagé dans l'axe creux 1, ces flasques étant par ailleurs centrés sur la face interne 5 de l'axe creux 1.

Le premier flasque 4a a une forme générale de disque, délimitée par une face externe plane 7a et une face interne plane 8a, et il comporte un orifice central 9a le traversant d'une face à l'autre. Ce flasque présente un bord externe 11a comportant consécutivement : une première portion cylindrique 12a joignant la face externe plane 7a, prolongée par une face d'appui 13a ayant une forme de couronne circulaire plane, et qui est elle-même prolongée par une seconde portion cylindrique 14a joignant la face interne plane 8a.

Le second flasque 4b a la même forme que le premier 4a, il comprend lui aussi une face externe et une face interne planes 7b et 8b ainsi qu'un orifice central 9b. Son bord 11b est aussi constitué de trois parties 12b à 14b identiques aux parties 12a à 14a.

Comme visible dans les figures, les premières portions cylindriques 12a et 12b ont un diamètre correspondant au diamètre externe de l'axe 1. Les secondes portions cylindriques 14a et 14b constituent une réduction de diamètre ayant un diamètre correspondant à celui de la face interne 5 de l'axe 1, pour assurer le centrage de chaque flasque dans l'extrémité correspondante de l'axe 1.

Ces flasques ont ainsi une forme généralement axisymétrique et présentent une faible épaisseur de l'ordre de quelques millimètres. Complémentairement, au moins l'un des flasques comporte une ou des ouvertures additionnelles, formant évents, destinés à éviter que de l'air humide ou d'autres fluides ne puisse être emprisonné dans l'espace délimité par l'axe creux et les flasques, de manière à réduire les risques d'oxydation de cet axe.

Lorsque les flasques sont en place, comme c'est le cas dans la figure, chacun d'eux est appliqué par sa face d'appui 13a 13b sur la face d'extrémité correspondante 3a, 3b de l'axe 1.

Le maintien des deux flasques en appui sur les extrémités de l'axe est assuré par le lien central 6 qui relie ces deux flasques l'un à l'autre tout en étant sensiblement tendu.

Dans l'exemple de la figure 1, les extrémités 5a et 5b du lien central 6 traversent respectivement l'orifice central 9a et 9b, et les terminaisons 6a et 6b de ces extrémités ont été matées après installation de l'ensemble sur l'axe creux 1, pour que ces terminaisons présentent un diamètre supérieur à celui des orifices 9a et 9b.

Lorsque l'ensemble du dispositif est en place, comme c'est le cas dans la figure, le lien 6 évite que les flasques ne se désolidarisent du tube, et il est éventuellement sous une légère tension mécanique pour tendre à les rapprocher l'un de l'autre, les terminaisons 6a et 6b étant en appui respectivement sur les faces externes 7a et 7b des flasques.

En pratique, le matériau constitutif du lien 6 peut être prévu thermoplastique pour faciliter l'opération de matage de ses extrémités lors de l'installation. Dans ce cas, l'opérateur utilise une source de chaleur pour mater dans un premier temps l'extrémité 6a du lien 6 et engager ce lien dans l'orifice 9a du premier flasque 4a, avant d'engager le lien dans l'axe creux 1 en le faisant dépasser de l'extrémité 2b de cet axe 1.

L'opérateur peut alors engager l'extrémité libre du lien 6 dans l'orifice 9b du second flasque 4b et emboîter ce second flasque 4b dans l'extrémité 2b de l'axe creux 1. A ce stade, l'opérateur saisit l'extrémité libre du lien 6 en la tirant vers lui pour mettre ce lien sous une tension relativement importante, et enserrer ce lien avec une pince placée contre la face externe 7b du second flasque. Dans cette situation, l'opérateur utilise alors sa source de chaleur pour mater l'extrémité 6b du lien, contre les flancs de la pince qu'il utilise.

Une fois que l'extrémité 6b a été matée, l'opérateur la laisse refroidir avant de desserrer la pince pour que cette extrémité vienne en appui sur la face externe 7b du second flasque, de par son élasticité. Comme on le comprend, une fois installé, le lien est sous tension et lié aux flasques pour les maintenir en position.

D'autres modes de réalisation du dispositif sont envisageables en ce qui concerne de manière générale la solidarisation des flasques par un ou plusieurs liens passant dans l'axe creux.

Par exemple, le système peut être fourni de telle manière que le lien est préalablement solidarisé à l'un des flasques, en étant par exemple fixé à sa face interne.

Par ailleurs, la solidarisation d'un lien à un flasque peut être assurée au moyen d'une agrafe externe qui est sertie sur l'extrémité de lien traversant un flasque. Dans ce cas, l'installation est analogue au cas où le lien est en matériau thermoplastique, si ce n'est qu'au lieu de mater les extrémités, l'opérateur sertit une agrafe à chaque extrémité de lien en utilisant par exemple une pince de sertissage.

Il est également possible de prévoir des moyens de blocage d'extrémité de lien portés par l'un, l'autre ou les deux flasques. A ce titre, l'orifice central de l'un des flasques peut être prévu avec une forme en étoile ou autre, de sorte que les sommets internes de cette découpe en étoile constituent des dents bloquant le lien lorsque celui-ci est passé dans l'orifice central.

Ces moyens de blocage peuvent également se présenter sous toute autre forme, en étant par exemple situés au niveau de la face externe du flasque considéré.

Chaque flasque peut aussi comporter un lien préalablement fixé à sa face interne, l'un de ces liens ayant alors une extrémité pourvue d'une bride de type tendeur de sangle incluant une mâchoire fermée par des moyens élastiques de rappel.

Dans ce cas, l'opérateur engage dans l'axe creux 1 le lien dépourvu de bride, puis il engage ce lien dans la bride située à l'extrémité de l'autre lien, et le repasse dans l'axe. L'opérateur peut alors tirer sur le lien libre pour rapprocher les deux flasques tout en assurant la mise sous tension des deux liens qui sont réunis dans l'axe creux par la bride formant frein ou tendeur de sangle.

Par ailleurs, le dispositif peut être fabriqué à partir de matériaux à base de fibres d'origine biologique et de résine de type réutilisable pour diminuer l'impact de la fabrication sur l'environnement tout en obtenant un dispositif ayant un faible coût.

Les flasques peuvent être fabriqués à partir de fibres courtes d'origine naturelle telles que des fibres de chanvre ou de lin, et d'une résine thermoplastique ou de biopolymères dans laquelle ils sont agglomérés.

Le lien peut quant à lui être réalisé à partir d'un ou plusieurs torons de fibres d'origine naturelle de chanvre ou de lin et enduites ou noyées dans une résine thermoplastique ou de biopolymères.

De manière générale, ce dispositif constitue un organe non travaillant puisqu'aucun des efforts hors les efforts assurant son maintien ne transite dans cet organe. La souplesse des flasques et du lien permettent d'absorber les impacts, par exemple en phase d'atterrissage. En cas d'impact trop important, le dispositif peut se désolidariser de l'axe et se détruire sans causer de dommage à l'aéronef ni aux aéronefs suivants.

## Revendications

1. Dispositif de limitation du bruit aérodynamique d'un atterrisseur d'aéronef déployé en phase d'atterrissage et/ou de décollage, comportant deux flasques (4a, 4b) destinés à boucher respectivement chaque extrémité (2a, 2b) d'un axe creux (1) de l'atterrisseur, tel qu'un axe d'articulation de deux bielles de cet atterrisseur, ainsi qu'au moins un lien (6) destiné à être engagé dans l'axe creux (1) pour relier les deux flasques (4a, 4b) l'un à l'autre afin de les maintenir plaqués aux extrémités (2a, 2b) de cet axe (1), dans lequel les flasques (4a, 4b) et/ou le lien (6) sont fabriqués à partir de fibres naturelles telles que des fibres de chanvre ou de lin agglomérées dans une résine de type réutilisable.

2. Dispositif selon la revendication 1, dans lequel au moins un flasque (4a, 4b) comporte un orifice central (9a, 9b) destiné à être traversé par le lien (6), pour solidariser ce lien (6) au flasque (4a, 4b) au moyen de l'extrémité du lien (1) traversant le flasque.

3. Dispositif selon la revendication 2, comportant en outre au moins un moyen de blocage tel qu'une agrafe, destiné à être rigidement solidarisé à une extrémité de lien (6) traversant un flasque (4a, 4b) par son orifice (9a, 9b), ce moyen de blocage présentant une section supérieure à celle de l'orifice (9a, 9b) pour être en appui sur une face externe (7a, 7b) de ce flasque (4a, 4b).

4. Dispositif selon la revendication 2 , dans lequel le flasque (4a, 4b) est pourvu de moyens de blocage d'une extrémité du lien (6) traversant son orifice central.

5. Dispositif selon la revendication 2, dans lequel le matériau du lien (6) est thermoplastique pour lier ce lien (6) à un flasque (4a, 4b) en matant la terminaison (6a, 6b) de l'extrémité (5a, 5b) de lien traversant l'orifice central (9a, 9b) de ce flasque (4a, 4b) au moyen d'une source de chaleur.

6. Dispositif selon l'une des revendications précédentes dans lequel l'un des flasques (4a, 4b) comporte des moyens de centrage (14a, 14b) grâce auxquels il s'emboîte dans l'extrémité d'axe (1) qu'il est destiné à boucher.

7. Dispositif selon la revendication 6, dans lequel les moyens de centrage sont formés par une réduction de diamètre (14a, 14b) du bord externe du flasque (4a, 4b).

8. Dispositif selon l'une des revendications précédentes, dans lequel au moins un flasque comporte une ou plusieurs ouvertures pour éviter une accumulation d'air humide à l'intérieur de l'axe.

## Patentansprüche

1. Vorrichtung zur Reduzierung der Strömungsgeräusche eines Fahrgestells eines Luftfahrzeugs, das in der Landephase und/oder beim Start ausgefahren ist, umfassend zwei Flansche (4a, 4b), die das jeweilige Ende (2a, 2b) einer Hohlachse (1) des Fahrgestells, beispielsweise eine Gelenkachse der beiden Gelenkstangen dieses Fahrgestells, verschließen sollen, sowie mindestens eine Verbindung (6), die in die Hohlachse (1) eingreifen soll, um die beiden Flansche (4a, 4b) miteinander zu verbinden, damit sie an den Enden (2a, 2b) dieser Achse (1) gehalten werden, bei der die Flansche (4a, 4b) und/oder die Verbindung (6) aus natürlichen Fasern hergestellt sind, beispielsweise aus Hanf- oder Leinenfasern, die in ein wiederverwendbares Harz gepresst sind.

2. Vorrichtung nach Anspruch 1, bei der mindestens ein Flansch (4a, 4b) eine zentrale Öffnung (9a, 9b) umfasst, durch die die Verbindung (6) laufen soll, damit diese Verbindung (6) mit Hilfe des Endes der Verbindung (1), die durch den Flansch läuft, fest mit dem Flansch (4a, 4b) verbunden wird.

3. Vorrichtung nach Anspruch 2, umfassend des Weiteren mindestens ein Sperrmittel, beispielsweise eine Klammer, die fest mit einem Ende der Verbindung (6), die die Öffnung (9a, 9b) eines Flansches (4a, 4b) durchsetzt, verbunden werden soll, wobei dieses Sperrmittel einen gegenüber dem Querschnitt der Öffnung (9a, 9b) größeren Querschnitt hat, damit es auf einer Außenfläche (7a, 7b) dieses Flansches (4a, 4b) anliegt.

4. Vorrichtung nach Anspruch 2, bei der der Flansch (4a, 4b) mit Mitteln zum Blockieren eines Endes der Verbindung (6) versehen ist, die seine zentrale Öffnung durchsetzt.

5. Vorrichtung nach Anspruch 2, bei der das Material für die Verbindung (6) ein Thermoplast ist, um diese Verbindung (6) mit einem Flansch (4a, 4b) zu verbinden, indem der Abschluss (6a, 6b) des Endes (5a, 5b) der Verbindung, die durch die zentrale Öffnung (9a, 9b) dieses Flansches (4a, 4b) verläuft, mittels einer Wärmequelle gestaucht wird.

6. Vorrichtung nach einem der vorhergehenden Ansprüche, bei der einer der Flansche (4a, 4b) Zentriermittel (14a, 14b) umfasst, durch die sich der Flansch in das Ende der Achse (1) das er verschließen soll, einfügt.

7. Vorrichtung nach Anspruch 6, bei der die Zentriermittel durch eine Verringerung des Durchmessers (14a, 14b) des äußeren Randes des Flansches (4as, 4b) gebildet sind.

8. Vorrichtung nach einem der vorhergehenden Ansprüche, bei der mindestens ein Flansch eine oder mehrere Öffnungen umfasst, um im Innern der Achse eine Ansammlung feuchter Luft zu vermeiden.

## Claims

1. A device for limiting aerodynamic noise from a deployed aircraft undercarriage while landing and/or takeoff, the device comprising two end plates (4a, 4b) for closing respective ends (2a, 2b) of a hollow pin (1) of the undercarriage, such as a hinge pin between two rods of the undercarriage, together with at least one tie (6) for engaging inside the hollow pin (1) to connect the two end plates (4a, 4b) together so as to hold them pressed against the ends (2a, 2b) of the pin (1), wherein the end plates (4a, 4b) and/or the tie (6) are made of natural fibers such as hemp or flax fibers agglomerated in a resin of reusable type.

2. A device according to claim 1, wherein at least one end plate (4a, 4b) includes a central orifice (9a, 9b) for having the tie (6) pass therethrough in order to secure the tie (6) to the end plate (4a, 4b) by means of the end of the tie (1) passing through the end plate.

3. A device according to claim 2, further including at least one locking means such as a staple for securing rigidly to an end of a tie (6) passing through an end plate (4a, 4b) via its orifice (9a, 9b), the locking means presenting a section greater than that of the orifice (9a, 9b) so as to bear against an outer face (7a, 7b) of the end plate (4a, 4b).

4. A device according to claim 2, wherein the end plate (4a, 4b) is provided with means for locking an end of the tie (6) passing through the central orifice thereof.

5. A device according to claim 2, wherein the material of the tie (6) is a thermoplastic for connecting said tie (6) to an end plate (4a, 4b) by using a source of heat to flatten the termination (6a, 6b) of the end (5a, 5b) of the tie passing through the central orifice (9a, 9b) of the end plate (4a, 4b).

6. A device according to any preceding claim, wherein one of the end plates (4a, 4b) includes centering means (14a, 14b) whereby it is engaged in the end of the pin (1) that it is to close.

7. A device according to claim 6, wherein the centering means are formed by a reduction in the diameter (14a, 14b) of the outside edge of the end plate (4a, 4b).

8. A device according to any preceding claim, wherein at least one end plate includes one or more openings to avoid moist air accumulating inside the pin.
